# EUROPÄISCHE PATENTSCHRIFT

(11) **EP 1 903 613 B1**
(45) Veröffentlichungstag und Bekanntmachung des Hinweises auf die Patenterteilung: **15.09.2010**
(21) Anmeldenummer: 07075638.2
(22) Anmeldetag: 20.07.2007
(51) Int. Cl.: H01L 31/042, H01L 31/048

(54) **Leichtgewichtiges Photovoltaiksystem in einer Ausbildung als Modulplatte**
Lightweight photovoltaic system in module plate form
Système photovoltaïque léger dans une formation en tant que plaque de module

(30) Priorität: 18.09.2006 DE 102006044418
(43) Veröffentlichungstag der Anmeldung: 26.03.2008
(73) Patentinhaber: SOLON SE, 12489 Berlin (DE)
(72) Erfinder: Schwarze, Sascha Oliver, 12277 Berlin (DE)

(56) Entgegenhaltungen:
- JP-A- 8 288 532
- JP-A- 2000 220 268
- JP-A- 2001 107 518
- JP-A- 2001 144 314
- US-A1- 2003 164 187
- US-A1- 2004 221 524
- US-A1- 2005 199 278

## Beschreibung

Die Erfindung bezieht sich auf ein leichtgewichtiges Photovoltaiksystem aus in Reihen und Spalten angeordneten Photovoltaikmodulen, die aus einem Photovoltaikpaneel und einer dazu beabstandeten, auf einem Substrat angeordneten selbsttragenden Leichtbauplatte aus einem wasserabweisenden Material bestehen, wobei alle Leichtbauplatten innerhalb der Photovoltaikanordnung durch Führungs- und Verbindungselemente lückenlos miteinander verbunden sind, und einem Rahmen- sowie einem Seilspannsystem.

Die Photovoltaik bietet unter den erneuerbaren Energieträgern aufgrund der modularen Bauweise der Photovoltaiksysteme aus einzelnen Photovoltaikmodulen die vielseitigsten Einsatzmöglichkeiten. Die Hauptanwendung liegt heute im Bereich der Verbraucheranwendung, d.h., Photovoltaiksysteme werden zur Umsetzung von Sonnenenergie in Elektroenergie genutzt. Dazu müssen die Photovoltaiksysteme auf sonnenzugänglichen Substraten installiert werden. Hierbei handelt es sich in der Regel um Freiflächen oder Dächer und Fassaden von Bauwerken. Für Photovoltaikmodule auf Flachdächern (Definition nach DIN bis 5° Neigung) ergeben sich auf Grundlage der DIN 1055-T4 und der DIN EN 1991-1- Teil 1 - 4 Lastansätze mit anzusetzenden Windlasten. Bei Flachdächern sind für die Bemessung von Photovoltaiksystemen maßgeblich die Windsoglasten von Bedeutung. Rechnerisch sind Werte für Windsoglasten auf Flachdächern für die Bundesrepublik Deutschland in der Windlastzone II zwischen 0,82 kN/m²-1,02 kN/m² anzusetzen. Es kann daher für Berechnungen ein Wert mit ~1,00 kN/m² in Ansatz gebracht werden. Für Europa kann davon ausgegangen werden, dass dieser Lastansatz noch erhöht werden muss. Die Lastannahmen für Europa entsprechen der deutschen Windlastzone III.

Die anstehenden Windsoglasten werden in der Regel durch das Eigengewicht eines Photovoltaiksystems mit einer Sicherheit gegen das Abheben aufgenommen (Schwerkraftsystem). Zusätzlich wird eine Sicherheit eingerechnet, die sich aus den Veränderungen in den anzunehmenden Reibkräften zwischen dem Substrat, beispielsweise der Dachhaut, und dem Schwerkraftsystem ergibt. Demnach muss eine Kraft von ca. 1,00 kN/m² (Bundesrepublik Deutschland, Windlastzone II, Gebäudehöhe < 20m) in das Dach eingeleitet werden, um ein Anheben des ungesicherten Photovoltaiksystems zu verhindern. Diese anzunehmende Flächenlast wird im Allgemeinen in eine Streckenlast umgewandelt und in die Dachfläche eingeleitet. Im Bereich der Kraftübertragung zwischen den Auflagern des Photovoltaiksystems und der Dachhaut entstehen so hohe Punkt- oder Streckenbelastungen, die die Dachfolie und Dachdämmung im erheblichen Maß beschädigen können. In den Wintermonaten wird diese Belastung noch durch zusätzlich anfallende Schnee- und Eislasten erhöht.

Eine weitere Problematik ergibt sich aus der in der Regel horizontalen Lage des Photovoltaiksystems. Zwischen der Systemunterseite und dem Substrat entsteht ein Windkanal, der zusätzliche Auftriebskräfte in das System bringt. Um nicht die Gesamtlast des Photovoltaiksystems zu erhöhen, muss deshalb umlaufend um das System ein Windabweiser verbaut werden. Eine andere Problematik ergibt sich aus den Lastreserven des Substrates, in der Regel der Dachkonstruktionen. Es ist davon auszugehen, dass schwere Dachkonstruktionen im Allgemeinen eine Lastreserve in ihrer konstruktiven Ausbildung besitzen. Bei den leichten Dachtragwerken muss jedoch davon ausgegangen werden, dass diese kaum Lastreserven beinhalten. Daraus folgt, dass ein Schwerkraftsystem auf leichten Dachkonstruktionen nicht einsetzbar ist.

Die meisten handelsüblichen Systeme setzen auf Gewicht. Üblicherweise wird dieses Gewicht über große Standflächen aus Steinquadern eingebracht. Eine andere Möglichkeit besteht darin, Wannen aus Kunststoff zu bauen, die dann mit Kies zur Beschwerung befüllt werden. Ein weiteres System baut Füße mit großen Platten an der Standfläche. Diese Flächen werden dann wie bei den anderen Systemen mit schweren Steinplatten, Steinquadern oder Kies beschwert. Eine Alternative dazu bildet ein leichtgewichtiges Photovoltaiksystem, wie es auch bei der Erfindung eingesetzt wird.

### Stand der Technik

Aus der DE 101 02 918 A1 sind photovoltaisch wirksame Verbundpaneele zur Gewinnung von Solarstrom und Solarwärme bekannt, die zwischen einer Trägerplatte und einer wetterschützenden, farblosen oder hochtransparenten Glastafel unter Verklebung fest miteinander verbunden sind. Aus der DE 202 15 867 U1 ist ein System zur Festlegung flächiger Photovoltaikmodule an Punktfundamenten oder-verankerungen bekannt, zwischen denen Drahtseile zur Verbindung mehrerer Halteprofile gespannt sind. Die Halteprofile werden durch an den Drahtseilen festgelegte Tragelemente mit den Photovoltaikmodulen fest verbunden. Die US 6 148 570 A offenbart ein hinterlüftetes Photovoltaiksystem, bei dem die einzelnen Photovoltaikmodule mit I-förmigen Halteprofilen, die mit der Dachhaut fest verbunden sind, miteinander verkoppelt sind. Umrandende Windabweisungsbleche sollen dafür sorgen, dass der Wind das System nicht von der Dachhaut abhebt.

Weiterhin offenbart die DE 100 37 757 A1 Verkleidungselemente zur äußeren Abdeckung eines Dachs oder einer Außenwand eines Gebäudes, in die Photovoltaikmodule integriert sind. Die einzelnen Verkleidungselemente sind durch Nut- und Federführungen und Stifte miteinander fest verbunden. Aus der DE 100 50 624 A1 sind Leichtbauplatten aus textilem Zweiwandgewebe mit expandiertem Polystyrol (EPS) bekannt.

Aus der US 57 46 839 A ist ein leichtgewichtiges Photovoltaiksystem bekannt, bei dem jedes Photovoltaikmodul aus einer Leichtbauplatte aus einem wasserabweisenden Material besteht, auf der mittels Abstandshalter ein Photovoltaikpaneel angeordnet ist. Alle Leichtbauplatten sind mittels einer Randprofilierung als Führungselement nach Art einer Nut- und Federverbindung definiert zueinander angeordnet. Das gesamte Photovoltaiksystem ist von einem geschlossenen Rahmensystem in Form eines Windabweisers umgeben. Die einzelnen Photovoltaikmodule sind rahmenlos. Das Rahmensystem wird durch ein Seilspannsystem in Form gehalten, wodurch auch die einzelnen Photovoltaikmodule gegeneinander gedrückt werden. Das Seilspannsystem besteht aus mehreren Zugseilen, die durch die Reihen und Spalten der Photovoltaikmodule hindurch gezogen sind und an gegenüberliegenden Innenseiten des Rahmensystems angreifen. Zwischen den Leichtbauplatten und dem Substrat, beispielsweise einem Flachdach, ist ein Spalt vorgesehen. Dieser dient dem Druckausgleich ober- und unterhalb des leichtgewichtigen Photovoltaiksystems. Zusammen mit dem windabweisenden umlaufenden Rahmensystem soll das Photovoltaiksystem so trotz seiner Leichtigkeit ohne weitere Sicherungsmaßnahmen den geforderten Windsoglasten standhalten.

Die genannten konstruktiven Maßnahmen scheinen aber offensichtlich nicht auszureichen, weshalb in der US 2003/0164187 A1**,** einer zeitlich nachfolgenden Anmeldung desselben Anmelders, von der die vorliegende Erfindung als nächstliegendem Stand der Technik ausgeht, ein ähnliches leichtgewichtiges Photovoltaiksystem offenbart wird, bei dem die Leichtbauplatten jedoch für einen besseren Druckausgleich zwischen Ober- und Unterseite jedes Photovoltaikmoduls Durchgangslöcher aufweisen. Diese schwächen jedoch die Druckstabilität der Leichtbauplatten. Außerdem sind in dem Zwischenraum zwischen dem Photovoltaikpaneel und der Leichtbauplatte strömungsführende strahlenförmige Barrieren angeordnet. Alle Photovoltaikpaneele müssen einen relativ großen Abstand zueinander aufweisen, damit Luft zwischen ihnen hindurch in die Durchgangsöffnungen einströmen kann. Dadurch wird die effektive Photovoltaikfläche verringert. Schließlich können immer zwei Leichtbauplatten auf ihrer Oberseite durch zusätzliche Verbindungselemente miteinander verbunden sein. Diese gegenüber der US 57 46 839 A zusätzlich ergriffenen, relativ aufwändigen Maßnahmen zeigen, dass eine Sicherung eines Leichtbausystems auf einem Substrat ohne eine direkte Fixierung am Substrat gegen das Abheben aufgrund von Windsoglasten problematisch ist.

### Aufgabenstellung

Die **Aufgabe** für die vorliegende Erfindung ist daher darin zu sehen, das eingangs beschriebene gattungsgemäße leichtgewichtige Photovoltaiksystem so weiterzubilden, dass eine erhöhte Witterungsbeständigkeit gegeben ist. Dabei soll insbesondere auch unter extremen Windsogbedingungen eine zuverlässige Fixierung auf dem Substrat gegeben sein. Schließlich sollen die Mittel zur Verbesserung der Witterungsbeständigkeit einfach herstell- und handhabbar sowie unempfindlich gegen Witterungseinflüsse und kostengünstig sein.

Als **Lösung** für diese Aufgabe ist bei einem gattungsgemäßen leichtgewichtigen Photovoltaiksystem deshalb erfindungsgemäß vorgesehen,
- dass an jedem Photovoltaikpaneel an gegenüberliegenden Seiten zwei offene Rahmenprofile angeordnet sind, in die auf der Unterseite jedes Photovoltaikpaneels ein Klemmsystem als Verbindungselement mit einem Koppelprofil als Führungselement eingreift, wobei jedes Klemmsystem gleichzeitig in vier um einen gemeinsamen Kreuzungspunkt benachbarte Photovoltaikpaneele eingreift und diese fest miteinander verbindet,
- dass eine durch die feste Verbindung aller Photovoltaikmodule mittels der Klemmsysteme gebildete Modulplatte als Photovoltaiksystem mittels des Seilspannsystems an zumindest zwei gegenüber liegenden Stellen fest mit dem Substrat verbunden ist,
- dass die Modulplatte spaltfrei direkt auf dem Substrat angeordnet ist und
- dass die Leichtbauplatten mit einer wasserdurchlässigen Struktur ausgebildet sind.

Bei dem erfindungsgemäßen Photovoltaiksystem wird unter Erhaltung aller bereits bekannten Vorteile eines Leichtbausystems (insbesondere leichte Montage, Anordnung auch auf belastungsschwächeren Substraten, witterungs-und feuerbeständig, druckfest) noch zusätzlich gewährleistet, dass alle unter normalen Witterungsbedingungen auftretenden Windsogkräfte sicher aufgenommen werden. Das Abheben des erfindungsgemäßen Photovoltaiksystems wird durch die Schaffung einer gemeinsamen Modulplatte und deren Absicherung durch ein einfaches Zugseilsystem an zumindest zwei Stellen zuverlässig verhindert. Weiterhin ist bei der Erfindung durch die Strukturierung der Leichtbauplatte gewährleistet, dass auf dem Substrat anfallendes Wasser abfließen kann.

Die Gewähr gegen Abheben wird bei dem erfindungsgemäßen Photovoltaiksystem durch einen festen geführten Verbund aller einzelnen vorkonfektionierten Photovoltaikmodule zur Bildung einer gemeinsamen stabilen Modulplatte auf dem Substrat gegeben. Diese Modulplatte ist dann wie eine Modulmatrix aus allen einzelnen Reihen und Spalten der einzelnen Photovoltaikmodule zusammengesetzt. Die Modulplatte wird dann in einfacher Weise an zumindest zwei gegenüber liegenden Stellen sicher am Substrat fixiert. Die Windsogkräfte und die Fixierungskräfte verteilen sich aufgrund der festen Verbindung aller Photovoltaikmodule untereinander in der gesamten Modulplatte. Druckausgleichsmaßnahmen mit einer Reihe von aufwändigen Zusatzmaßnahmen oder aufwändige Befestigungen jedes einzelnen Photovoltaikmoduls, die das Substrat an vielen Stellen verletzen, entfallen. Dabei wird die feste Verbindung bei dem erfindungsgemäßen Photovoltaikmodul durch offene Rahmenprofile erzeugt, die genau an zwei gegenüberliegenden Seiten jedes Photovoltaikpaneels angeordnet sind. Hierbei handelt es sich in der Regel um die Schmalseiten eines rechteckigen Photovoltaikpaneels. Einen das gesamte Photovoltaiksystem umgebenden Rahmen, der als Zusammenfassung und als Windabweiser dient und außerhalb der Vorkonfektion der einzelnen Photovoltaikmodule vor Ort aufwändig zu montieren ist, gibt es nicht. Auf der Unterseite jedes Photovoltaikpaneels weisen diese Rahmenprofile Klemmsysteme auf, die nach der Anordnung von vier Photovoltaikmodulen um einen gemeinsamen Kreuzungspunkt in den Rahmenprofilen über diesen Kreuzungspunkt geschoben und fixiert werden. Dadurch ist sicher gewährleistet, dass immer vier um einen gemeinsamen Kreuzungspunkt angeordnete Photovoltaikmodule fest miteinander verbunden sind. Durch Vorsehen einer Vielzahl dieser Klemmsysteme entsteht dann die gemeinsame stabile Modulplatte.

Um eine derartige, in sich stabile Modulplatte dann auf einem Substrat sicher zu befestigen, bedarf es nur weniger Ankerpunkte, sodass auch das Substrat nur an wenigen Stellen beeinflusst werden muss. Im einfachsten Fall handelt es sich dabei um zwei Fixierungen an gegenüber liegenden Seiten der Modulplatte. Günstiger sind vier Fixierungen an allen vier Seiten des Photovoltaiksystems oder an den Längsseiten. Die Anordnung der Fixierungen ist dabei abhängig von der Form der Modulplatte, den Gegebenheiten auf dem Substrat und den konkreten zu erwartenden Windsoglasten. Dabei soll an dieser Stelle angemerkt werden, dass das Eigengewicht der gesamten Modulplatte aus der Gewichtsaddition aller einzelnen Photovoltaikmodule bereits eine gute Garantie gegen Abheben aufgrund von normalen Windsoglasten auch ohne Fixierungen mit dem Substrat bietet.

Bei der Fixierung der Modulplatte auf dem Substrat ist es besonders vorteilhaft, dass die Modulpatte bei dem erfindungsgemäßen Photovoltaiksystem direkt auf dem Substrat angeordnet ist. Aufwändig mit Abstandshaltern herzustellende flächige Spalte unterhalb der Leichtbauplatten für einen Druckausgleich entfallen. Bei der Montage können die Leichtbauplatten direkt auf das Substrat aufgelegt und aneinander geschoben werden. Allerdings ist bei der direkten Auflage darauf zu achten, dass auf dem Substrat auftretendes Wasser auch ungehindert abfließen kann. Dazu weisen die Leichtbauplatten bei der Erfindung, die an sich aus einem wasserabweisenden Material sind, zusätzlich eine wasserdurchlässige Struktur auf. Hierbei kann es sich beispielsweise um eine poröse Struktur handeln, wie sie von Drainageplatten bekannt ist. Abfließendes Wasser würde dann die gesamte Leichtbauplatte durchströmen. Grundsätzlich ist die Struktur in ihrer Ausprägung an die anfallenden Wassermengen anzupassen. Dabei darf die wasserdurchlässige Struktur aber die Stabilität der selbsttragenden Leichtbauplatte und das Photovoltaikpaneel nicht gefährden. Weiterhin kann es sich um Profilierungen der unteren Oberfläche der Leichtbauplatte, die auf dem Substrat aufliegt, handeln. Diese Profilierungen können einen in weite 8 eichen frei wählbare Anordnung, Verlauf und Querschnitt aufweisen. Beispielsweise kann es sich um einfache halbrunde oder eckige Längsrinnen mit einem mittleren Abstand zueinander handeln. Gemäß einer besonders vorteilhaften Weiterbildung der Erfindung kann die wasserdurchlässige Struktur der Leichtbauplatten aber auch von einer auf der dem Substrat zugewandten Seite der Leichtbauplatten vorgesehenen Trapezstruktur mit Längs- und Querrillen gebildet sein. Dabei weisen die verbleibenden Kreuzungspunkte der Leichtbauplatten aber noch ausreichende Stabilität auf, um die in der Modulplatte auftretende Gesamtlast sicher zu tragen.

Weiterhin können die Leichtbauplatten mit einer umlaufenden Perimeterdämmung ausgeführt sein. Dabei können die Platten aus dem Vollen gesägt oder in Form gegossen werden. Alternativ können vorteilhaft die Leichtbauplatten als Sandwichplatten aus zwei Kunststoffplatten, die durch ein Raumfachwerk miteinander verbunden sind, oder aus einem Drahtgeflecht, das mit luftgefüllten Behältern gefüllt ist, ausgebildet sein.

Nach einer nächsten Erfindungsausgestaltung ist es vorteilhaft, wenn die Photovoltaikpaneele außerhalb einer Wasserrückstauebene auf dem Substrat angeordnet sind. Zu Erreichung dieser Bauhöhe können die Leichtbauplatten eine entsprechende Bauhöhe aufweisen. Dies gilt auch für wasserfeste Photovoltaikpaneele, die vorteilhaft als wetterfeste Laminate ausgebildet sind. Bei Laminaten sind die Solarzellen wasserdicht eingeschlossen. Trotzdem kann der Einfluss von Wasser dem Laminat oder seinen elektrischen Anschlüssen schaden. Bei einer Ausbildung der Photovoltaikpaneele als Laminate können diese vorteilhaft mittels zweier Klemmleisten auf der Oberseite der Laminate jeweils in die beiden Rahmenprofile an der Seite jedes Photovoltaikmoduls gedrückt werden. Dabei werden die Laminate im Randbereich von Profil- oder Klemmgummis geschützt und elastisch gelagert. Die Verschraubung über die Klemmleisten erfolgt zwängungsfrei. Weiterhin können vorteilhaft die Laminate bifaciale Solarzellen aufweisen. Derartige Solarzellen sind besonders effizient, da sie auf beiden Oberflächen unter Lichteinstrahlung photoaktiv sind. Damit auch Licht auf die Unterseite der bifacialen Solarzellen fällt, ist es weiterhin vorteilhaft, wenn auf der Oberseite der Leichtbauplatten unterhalb des Photovoltaikpaneels ein Reflektor, beispielsweise in Form einer flächigen Reflektorfolie, angeordnet ist.

Schließlich kann bei der Erfindung noch vorteilhaft vorgesehen sein, dass die Klemmsysteme jeweils aus einem oberen Klemmbock und einem unteren Klemmbock bestehen, die seitlich gemeinsam ein Trapez bilden, das in Trapezführungen in den Rahmenprofilen eingreift. Die Trapezführung bildet damit neben der Nut- und Federführung der einzelnen Leichtbauplatten untereinander ein weiteres Führungselement, das die Rahmenprofile der einzelnen Photovoltaikmodule miteinander verbindet. Andere als trapezartige Führungen sind bei der Erfindung natürlich ebenso einsetzbar. Die beiden Klemmböcke sind gegeneinander verkeilbar ausgebildet und fixieren so die einzelnen Photovoltaikmodule miteinander. Damit wirken die beiden Klemmböcke wie ein "Modulschloss" zur sicheren, stabilen, kraftübertragenden, dauerhaften Verbindung der einzelnen Photovoltaikmodule untereinander. Zur Verbindung der einzelnen Photovoltaikmodule werden oberer und unterer Klemmbock übereinander gelegt und in die Trapezführungen der Rahmenprofile benachbarter Photovoltaikmodule bis über die Kreuzungspunkte eingeschoben. Anschließend werden die beiden Klemmböcke beispielsweise durch Auflagerschrauben gegeneinander verspannt, sodass sie fest, aber lösbar in den Rahmenprofilen sitzen. Vorteilhaft kann der untere Klemmbock eine Durchgangsbohrung zur Aufnahme eines Seils des Seilspannsystems aufweisen, sodass eine zusätzlich Sicherung der einzelnen Modulreihen möglich ist.

Weitere konstruktive Einzelheiten zu den zuvor beschriebenen Ausführungsformen der Erfindung sind dem nachfolgenden speziellen Beschreibungsteil zu entnehmen.

### Ausführungsbeispiele

Ausbildungsformen des leichtgewichtigen Photovoltaiksystems nach der Erfindung werden nachfolgend zu deren weiteren Verständnis anhand der schematischen Figuren näher erläutert. Dabei ist die Erfindung aber nicht auf die Ausführungsbeispiele beschränkt. Im Einzelnen zeigt:
- **Figur 1**: eine perspektivische Ansicht des Photovoltaiksystems auf einem Substrat,
- **Figur 2**: eine perspektivische Ansicht eines Photovoltaikmoduls in Explosionsdarstellung,
- **Figur 3**: einen Querschnitt durch ein vorkonfektioniertes Photovoltaikmodul (eine Hälfte),
- **Figur 4**: ein Detail des Photovoltaikmoduls im Bereich des Rahmenprofils und
- **Figur 5**: ein Detail des Rahmenprofils im Bereich des Klemmsystems.

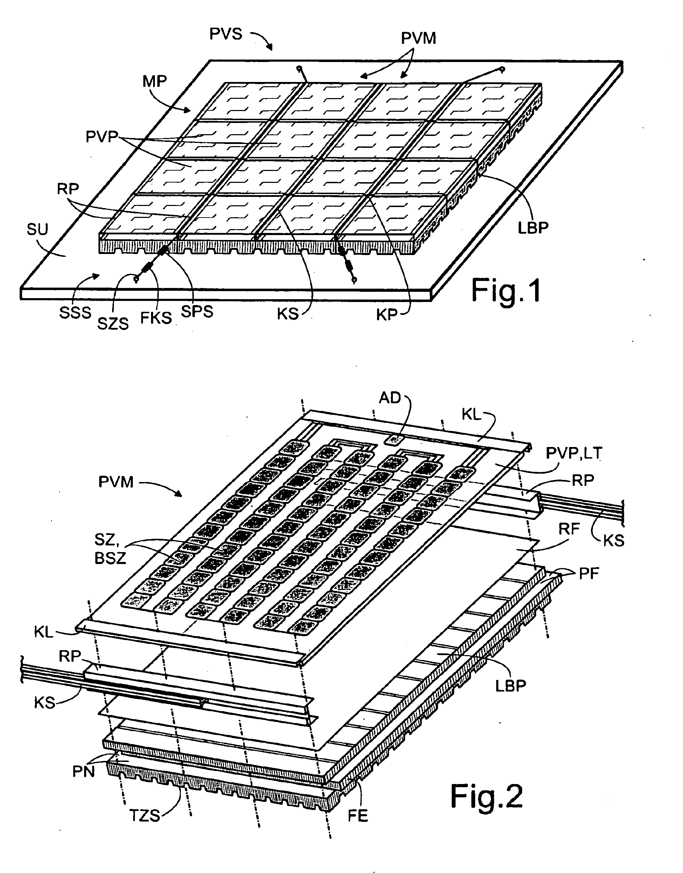

Die **Figur 1** zeigt ein leichtgewichtiges Photovoltaiksystem **PVS,** das direkt auf einem Substrat **SU,** beispielsweise einem Flachdach, angeordnet ist. Das gezeigte Photovoltaiksystem **PVS** besteht aus 16 einzelnen Photovoltaikmodulen **PVM,** die in Reihen und Spalten angeordnet sind und die Photovoltaikpaneele **PVP** tragen. Durch eine feste Verbindung aller Photovoltaikmodule **PVM** untereinander wird eine stabile eckige Modulplatte **MP** im Sinne einer Modulmatrix aus allen Reihen und Spalten der einzelnen Photovoltaikmodule **PVM** gebildet, die alle auftretenden Belastungen sicher aufnehmen und verteilen kann. Die Montage erfolgt direkt auf dem Substrat **SU.** Jedes Photovoltaikmodul **PVM** ist komplett vorkonfektioniert. Bei der Montage werden die Photovoltaikmodule **PVM** lediglich zusammen geschoben (von Vorteil ist dabei die direkte Lagerung auf dem Substrat **SU** ohne eine abstandsbildende Aufständerung) und fest untereinander verbunden. Die feste Verbindung wird durch ein Klemmsystem **KS** bewirkt, das sich übergreifend zwischen den Photovoltaikmodulen **PVM** erstreckt, sodass immer vier um einen Kreuzungspunkt **KP** angeordnete, benachbarte Photovoltaikmodule **PVM** fest miteinander verbunden sind. Die durch eine derartige Überdeckung im Randbereich der Modulplatte **MP** entstehenden Lücken in den Rahmenprofilen **RP** werden durch entsprechend halbierte Klemmsysteme **KS** ausgeglichen, sodass der stabile Modulverbund der einzelnen Photovoltaikmodule **PVM** in der Modulplatte **MP** bis in den Randbereich sicher garantiert ist.

Letzter Arbeitsschritt bei der Montage ist das Verbinden der Modulplatte **MP** mit dem Substrat **SU.** Im gezeigten Ausführungsbeispiel ist die Modulplatte **MP** an nur vier Stellen mittels eines Seilspannsystems **SSS** an das Substrat **SU** angebunden. Das Seilspannsystem **SSS** greift in Rahmenprofile **RP** ein und besteht jeweils aus einem Stahlzugseil **SZS,** das den statischen Lastanforderungen entsprechend bemessen ist, einem Spannschloss **SPS** zur Erzeugung einer Vorspannung und einer Federkonstruktion **FKS,** die für eine gleichmäßige Federspannung bei thermischen Schwankungen sorgt.

Weiterhin ist in der **Figur 1** eine Strukturierung (hier eine Trapezstruktur mit Längs- und Querrillen) von Leichtbauplatten **LBP** auf der Kontaktseite mit dem Substrat **SU** zu erkennen, die der Ableitung von anfallendem Wasser dient. Die Leichtbauplatten **LBP** sind selbsttragend und bilden die Grundlage jedes Photovoltaikmoduls **PVM.** Weitere Details sind den nachfolgend erläuterten Figuren zu entnehmen.

In der **Figur 2** ist eine auseinander gezogene perspektivische Darstellung eines Photovoltaikmoduls **PVM** dargestellt. Die Leichtbauplatte **LBP** dient als selbsttragende Grundlage jedes Photovoltaikmoduls **PVM** und damit der gesamten Modulplatte **MP** (vergleiche **Figur 1**). Die Leichtbauplatte **LBP** besteht im Ausführungsbeispiel aus einem wasserabweisenden Material, beispielsweise EPS-Hartschaumplatte (EPS = Expandierbares PolyStyrol) und ist entweder in Form geschäumt oder geschnitten worden. An ihrer Unterseite ist die Leichtbauplatte **LBP** strukturiert, um trotz der direkten Auflage auf dem Substrat **SU** (vergleiche **Figur 1**) einen Wasserabfluss zu ermöglichen. Umlaufend ist die Leichtbauplatte **LBP** mit einer Profilierung als Führungselement **FE** versehen. Zwei Seiten sind mit einer Profilnut **PN,** zwei Seiten mit einer Profilfeder **PF** versehen (in der **Figur 2** nur schematisch dargestellt). Diese erleichtern die Montage auf der Baustelle zu erkennen, mit deren Hilfe benachbarte Leichtbauplatten **LBP** gegeneinander fixiert werden. Die Längen-und Breitenmaße jeder Leichtbauplatte **LBP** richten sich nach den technischen Erfordernissen des Photovoltaikpaneels **PVP.** Die Unterseite der Leichtbauplatte **LBP** ist mit einer Trapezstruktur **TZS** in Längs- und Querrichtung profiliert, um den Wasserabfluss zu gewährleisten. Diese Profilierung gewährleistet auch ein Ablüften der Leichtbauplatte **LBP** an ihre Unterseite nach Regen oder Schneeschmelzperioden.

Der EPS-Hartschaumplatte hat eine bauaufsichtliche Zulassung als Perimeterdämmung, und ist hinsichtlich der Baustoffklasse nach DIN 4102 in seinem Brandverhalten in der Klasse B1 eingestuft. Die Rohdichte wird mit - 20 - 30 kg/m³ angegeben, und erfüllt somit die Forderung nach einer möglichst geringen Dichte. Die Wasseraufnahme des Materials wird mit ±0,05% (gewichtsbezogen) angegeben, und erfüllt damit die Forderung wasserfest bzw. wasserabweisend zu sein. Der EPS-Schaum ist resistent gegen pflanzliche, tierische und mikrobiologische Schädlinge. Das Material bietet ihnen keinen Nährboden; es fault, schimmelt und verrottet nicht. Selbst, wenn sich bei starker Verschmutzung und unter besonderen Bedingungen Mikroorganismen auf dem Schaumstoff ansiedeln, so dient er lediglich als Träger und ist am biologischen Vorgang völlig unbeteiligt. Die abführbare Druckspannung wird mit 150 KN/m² angegeben, und erfüllt die Forderung nach einer dynamischen Steifigkeit um ein Vielfaches. Direkte Einwirkung von Sonnenlicht führt aufgrund des hohen UV-Anteils nach einigen Wochen zu einer Vergilbung der Schaumstoffoberfläche. Für die mechanische Festigkeit ist diese Versprödung wegen der geringen Eindringtiefe ohne Bedeutung. Dieser Punkt kann jedoch als unkritisch eingeschätzt werden, da nur ein geringer Teil der Leichtbauplatte **LBP,** nämlich die Schmalseiten der Randbereiche, wirklich dem UV-Licht ausgesetzt sind. Als Abhilfe kann die EPS-Hartschaumplatte mit Lacken, Blechen oder Schutzanstrichen versehen werden. Denkbar ist auch ein Putzauftrag als Kantenschutz. Hartschaumplatten aus EPS bestehen bei den üblichen Rohdichten zu 1-5% aus Polystyrol, einem thermoplastischen Kunststoff. Der lineare Ausdehnungskoeffizient bei Wärmeeinwirkung wird mit 7 10⁻⁵/K angegeben. Energiereiche Strahlung, d.h. kurzwellige UV-Strahlung, Röntgen- und γ-Strahlung, verursacht bei längerer Einwirkung eine Versprödung des Schaumstoffgerüstes und haben somit eine direkte nachteilige Auswirkung auf die Druck-und Biegespannung des Materials. Diese Verschlechterung der Materialeigenschaften kann aber aufgrund der vielfachen Überdimensionierung der Leichtbauplatten **LBP** ebenfalls als unkritisch angesehen werden. Weiterhin werden die Leichtbauplatten **LBP** nicht als verbundmaterial eingesetzt (weitere Komponenten werden lösbar verschraubt und nicht verklebt), sodass eine Rückführung und Wiederverwendung möglich ist.

Mögliche Ausführungsformen der Leichtbauplatte **LBP** werden nachfolgend beschrieben. Das Leichtbauplatte **LBP** kann mit einer als Perimeterdämmung zugelassenen EPS-Hartschaumplatte ausgeführt werden. Die Dämmung wird in großen Blöcken vergossen und nachträglich mit einer Thermosäge auf Maß geschnitten und profiliert. Vorteile sind hier: geringe Rohdichte, geringes Transportgewicht, wasserfest, witterungsbeständig, widerstandsfest gegen Frost-Tau Wechselbeanspruchung, druckfest, Brandverhalten entsprechend den Landesbauordnungen, Formatänderungen jederzeit möglich. Nachteilig ist, dass durch die nachträgliche Bearbeitung die "Schäumhaut" beschädigt wird, wodurch Strukturänderungen im Materialgefüge, Gefahr durch Wasseraufnahme (die bearbeiteten Flächen müssen nachträglich imprägniert werden), Nachdunkeln der dem UV-Licht ausgesetzten Kanten auftreten kann. Eine andere Variante sieht deshalb vor, dass die Leichtbauplatte **LBP** mit einer als Perimeterdämmung zugelassenen EPS-Hartschaumplatte ausgeführt wird. Die Dämmung wird stückweise, in einer eigens dafür angefertigten Form vergossen. Besonders vorteilhaft ist hierbei, dass die "Schäumhaut" auf allen Oberflächen erhalten bleibt und keine nachträgliche Bearbeitung erforderlich ist.

Weiterhin kann die Leichtbauplatte **LBP** als Sandwichkonstruktion ausgeführt sein. Dieses wird aus zwei Kunststoffplatten gebildet, die durch ein Raumfachwerk miteinander verbunden sind. Vorteilhaft ist hierbei eine mittlere Rohdichte, die aber deutlich über den Rohdichten von PU-Schäumen liegt. Nachteilig ist der Bau einer aufwändigen und kostenintensiven Kunststoffspritzform, weiterhin sind Formatänderungen nicht möglich. Das Raumfachwerk bildet einen Kanal, der zu unerwünschten Windauftriebskräften führen kann.

Schließlich kann das Sandwich auch aus einem Drahtgeflecht gebildet sein, das mit Luftbehältern, beispielsweise Tischtennisbällen, gefüllt wird. Bei einem Durchmesser eines Tischtennisballs von 0 40 mm und einem Gewicht von 2,7g: Packung auf einen dm³ = 2,5 Bälle in Länge, Breite und Höhe → 2,5 x 2,5 x 2,5 = ~ 16 Stk./dm³ → 16Stk. x 2,7=43,2 g/dm³ = 43,2 Kg/m³ > PU-Dämmstoffe oder EPS Hartdämmplatten.

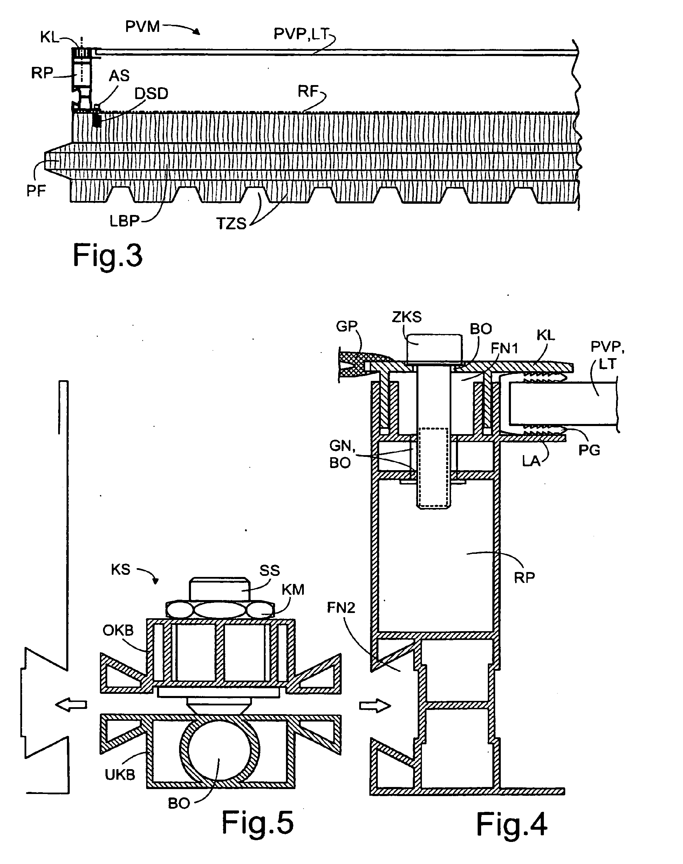

Auf die Leichtbauplatte **LBP** wird im gezeigten Ausführungsbeispiel ein Reflektor **RF** aufgelegt, Der Reflektor **RF** dient bei der Verwendung von bifacialen Solarzellen **BSZ** der Bestrahlung der Solarzellenrückseite. An beiden Schmalseiten der Leichtbauplatte **LBP** werden zwei Rahmenprofile **RP** (vergleiche **Figur 4****)** festgeschraubt. Diese Rahmenprofile **RP** dienen der zwängungsfreien Halterung des Photovoltaikpaneels **PVP** (zusammen mit Klemmleisten **KL,** vergleiche **Figur 4****)** und des Klemmsystems **KS** (vergleiche **Figuren 4** und **5****).** Der Profilquerschnitt des Rahmenprofils **RP** wird den statischen Erfordernissen angepasst.

Das Photovoltaikpaneel **PVP** ist im gewählten Ausführungsbeispiel in Form eines wetterfesten Laminats **LT** ausgebildet. Das Laminat **LT** wird auf Grundlage von angefertigten Simulationsrechnungen modifiziert. Es wird mit den Abmessungen 1796 mm x 1110 mm aus 4 mm dicken ESG- Weißglas (Einscheibensicherheitsglas) entsprechend den statischen Erfordernissen gefertigt. Auf das ESG-Weißglas sind im gewählten Ausführungsbeispiel sechs Reihen von je 12 Solarzellen **SZ** gelegt. Bei den Solarzellen **SZ** handelt es sich im gewählten Ausführungsbeispiel um bifaciale Solarzellen **BSZ,** die einen beidseitigen Strahlungseinfall umsetzen können (weshalb unterhalb jedes Photovoltaikpaneels **PVP** ein Reflektor **RF** vorgesehen ist). Anstelle der zweiseitigen Solarzellen **BSZ** können aber auch ohne weiteres einseitige Solarzellen eingesetzt werden. Der Abstand zwischen den einzelnen Reihen beträgt ungefähr 60 mm. Der Randabstand in Richtung der optisch aktiven Fläche beträgt 30 mm. Auf der Seite, auf der das Photovoltaikpaneel **PVP** aufgelagert wird, beträgt der Abstand 140 mm. Das Photovoltaikpaneel **PVP** ist mit einer Anschlussdose **AD** mit 3 Dioden ausgerüstet. Als Einbettungsmaterial der Solarzellen **SZ** zu deren elektrischer Isolation wird eine EVA-Folie eingesetzt. Den mechanischen Schutz auf der Rückseite des Laminats **LT** bildet eine transparente Tedlarfolie.

Die **Figur 3** zeigt ein fertig vorkonfektioniertes Photovoltaikmoduls **PVM** im Querschnitt. Das gesamte Photovoltaikmodul **PVM** hat eine Länge von 1850 mm, eine Breite von 1100 mm und eine Höhe von 200 mm. Zu erkennen ist das als Laminat **LT ausgebildete** Photovoltaikpaneel **PVP,** das mit einem Abstand von 50 mm zum Reflektor **RF** angeordnet ist. Der Reflektor **RF** ist unmittelbar mit der Leichtbauplatte **LBP** verbunden ist. Das Laminat **LT** ist im Rahmenprofil **RP** gelagert und mit der Klemmleiste **KL** fixiert. Das Rahmenprofil **RP** nimmt im unteren Bereich das Klemmsystems **KS** auf und ist mit vier rostfreien Ansatzschrauben **AS** (4x50 mm bzw. 4,5x55 mm) in Dämmstoffdübeln **DSD** in der Leichtbauplatte **LBP** festgeschraubt (je vier Verschraubungen pro Photovoltaikmodul **PVM).** Mit den Ansatzschrauben **AS** wird auch der Reflektor **RF** auf der Leichtbauplatte **LBP** fixiert. Die Dämmstoffdübel **DSD** sind aus Kunststoff. Aufgrund der geschützten Lage unter dem Reflektor **RF** haben Witterungseinflüsse und UV-Licht kaum einen Einfluss auf die Langzeiteigenschaften der Dämmstoffdübel **DSD**.

Deutlich ist die Profilierung der Leichtbauplatte **LBP** mit Profilfeder **PF** (die entsprechende Profilnut **PN** ist auf der anderen, nicht dargestellten Hälfte der Leichtbauplatte **LBP** angeordnet) im Randbereich und Trapezstruktur **TZS** auf der Unterseite zu erkennen. Die Höhe der Leichtbauplatte **LBP** kann mit 0,10 m bis 0,20 m angesetzt werden, um über eine angenommene Wasserrückstaugrenze (bei horizontal orientierten Substraten **SU** (vergleiche **Figur 1****))** zu kommen (und das Photovoltaikpaneel **PVP** trocken zu halten). Diese Forderung leitet sich aus der Flachdachrichtlinie ab. Nach der Flachdachrichtlinie werden alle wasserführenden Schichten bis mindestens 0,15 m über die Dachhaut geführt. Die Rückstauhöhe wird ebenfalls mit 0,15 m angesetzt.

Die **Figur 4** zeigt ein Detail der **Figur 3** im Bereich des Rahmenprofils **RP.** Dieses weist auf der rechten Seite eine Lasche **LA** auf, auf dem das das Photovoltaikpaneel **PVP** bzw. das Laminat **LT** gelagert ist. Das Laminat **LT** wird an seinen Auflagerseiten mit einem Profilgummi **PG** aus EPDM (Ethylen-Propylen-Dien-Kautschuk) geschützt (Kantenschutz) und zwängungsfrei gelagert. Das Profilgummi **PG** ermöglicht ein Arbeiten des Laminats **LT** durch thermische bzw. statische Einflüsse, sodass ein Bruch verhindert wird. Als Material dient EPDM, das im Bauwesen als Standardmaterial bei Glaskonstruktionen erfolgreich eingesetzt wird. Es ist entsprechend den Erfordernissen witterungsbeständig und UV-lichtbeständig. Die mögliche Dichtungsfunktion ist für das wasserdichte Laminat **LT** nicht von Bedeutung.

Das Rahmenprofil **RP** weist eine erste Führungsnut **FN1** zur Aufnahme der Klemmleiste **KL** und eine zweite Führungsnut **FN2** (Trapezführung) zur Aufnahme und Führung des Klemmsystems **KS** (vergleiche **Figur 5****)** auf. Des Weiteren weist das Rahmenprofil **RP** in der ersten Führungsnut **FN1** entsprechend statischen Erfordernissen Bohrungen **BO** zur Aufnahme von selbstschneidenden Gewindeschrauben **GN** auf, die als Anschraubpunkte für die Klemmleiste **KL** dienen. Quer zum Profilquerschnitt des Rahmenprofils **RP** sind Langlöcher (nicht dargestellt) eingefräst, das dem elektrischen Anschluss des Photovoltaikmoduls **PVM,** d.h. zur Durchführung der Kabel der Anschlussdose **AD** zum Kabelkanal, dient.

Mit der Klemmleiste **KL,** die von oben in das Rahmenprofil **RP** eingreift, wird das Laminat **LT** zwängungsfrei an das Rahmenprofil **RP** angepresst. Die Klemmleiste **KL** ist aus Aluminium und erhält entsprechend dem Bohrbild des Rahmenprofils **RP** Durchgangsbohrungen **BO** zur Aufnahme von metrischen Schrauben **ZKS.** Ein Gummiprofil **GP** greift auf der gegenüberliegenden Seite an die Klemmleiste **KL** an und überbrückt den Spalt zum nächsten Photovoltaikmodul **PVM.** Dort greift es ebenfalls an die nächste, spiegelsymmetrisch angeordnete Klemmleiste **KL** an.

In **Figur 5** ist ein Detail der **Figur 3** im Bereich des Klemmsystems **KS** dargestellt. Das Klemmsystem **KS** dient als Koppelprofil ähnlich einer Trapezführung unter den einzelnen Photovoltaikmodulen **PVM,** um die statische Plattenwirkung in der gemeinsamen Modulplatte **MP** zu erreichen. Das Klemmsystem **KS** besteht aus einem oberen Klemmbock **OKB** und einem unteren Klemmbock **UKB.** Beide bilden zusammen im Sinne eines Modulschlosses, das die einzelnen Photovoltaikmodule **PVM** sicher miteinander verschließt, den trapezförmigen Ansatz, der in der Trapezführung geführt wird. Der untere Klemmbock **UKB** erhält zusätzlich eine Bohrung **BO** zur Aufnahme und/oder Durchführung des Zugseilsystems. Möglich ist es hier, in die Bohrung **BO** des Photovoltaikpaneels **PVP** am Rand der Modulplatte MP eine Augenschraube einzusetzen, um so alle Reihen der Photovoltaikmodule **PVM** durch ein Seil verbinden zu können. Der obere Klemmbock **OKB** erhält zum Spannen des Klemmsystems **KS** entsprechend den statischen Erfordernissen ausreichend viele Schrauben **SS** mit entsprechenden Gewindeaufnahmen und Kontermuttern **KM.**

In der **Figur 5** ist noch das Rahmenprofil **RP** des nächsten Photovoltaikmoduls **PVM** angedeutet, in dessen trapezförmige Führung das Klemmsystems **KS** ebenfalls im montierten Zustand eingreift, sodass die einzelnen Photovoltaikmodule **PVM** sicher und kraftschlüssig miteinander verbunden sind. Durch einer derartige Verbindung aller Photovoltaikmodule **PVM** über die Kreuzungspunkte **KP** hinweg, entsteht so die stabile Modulplatte **MP** im Sinne einer Modulmatrix mit fest verbunden Reihen und Spalten aus einzelnen Photovoltaikmodulen **PVM.**

### Bezugszeichenliste

- **AD**: Anschlussdose
- **AS**: Ansatzschraube
- **BO**: Bohrung
- **BSZ**: bifaciale Solarzelle
- **DSD**: Dämmstoffdübel
- **FE**: Führungselement
- **FKS**: Federkonstruktion
- **FN**: Führungsnut
- **GN**: Gewindeniet
- **GP**: Gummiprofil
- **KL**: Klemmleiste
- **KM**: Kontermutter
- **KP**: Kreuzungspunkt
- **KS**: Klemmsystem
- **LA**: Lasche
- **LBP**: Leichtbauplatte
- **LT**: Laminat
- **MP**: Modulplatte
- **OKB**: oberer Klemmbock
- **PF**: Profilfeder
- **PG**: Profilgummi
- **PN**: Profilnut
- **PVM**: Photovoltaikmodul
- **PVP**: Photovoltaikpaneel
- **PVS**: Photovoltaiksystem
- **RF**: Reflektor
- **RP**: Rahmenprofil
- **SPS**: Spannschloss
- **SU**: Substrat
- **SS**: Schraube
- **SSS**: Seilspannsystem
- **SZS**: Stahlzugseil
- **SZ**: Solarzelle
- **TZS**: Trapezstruktur
- **UKB**: unterer Klemmbock
- **ZKS**: Zylinderkopfschraube

## Patentansprüche

1. Leichtgewichtiges Photovoltaiksystem aus in Reihen und Spalten angeordneten Photovoltaikmodulen, die aus einem Photovoltaikpaneel (PVP) und einer dazu beabstandeten, auf einem Substrat (SU) angeordneten selbsttragenden Leichtbauplatte (LBP) aus einem wasserabweisenden Material bestehen, wobei alle Leichtbauplatten (LBP) innerhalb der Photovoltaikanordnung durch Führungs- und Verbindungselemente lückenlos miteinander verbunden sind, und einem Rahmen- sowie einem Seilspannsystem,
**dadurch gekennzeichnet,**
• **dass** an jedem Photovoltaikpaneel (PVP) an gegenüberliegenden Seiten zwei offene Rahmenprofile (RP) angeordnet sind, in die auf der Unterseite jedes Photovoltaikpaneels (PVP) ein Klemmsystem (KS) als Verbindungselement mit einem Koppelprofil als Führungselement eingreift, wobei jedes Klemmsystem (KS) gleichzeitig in vier um einen gemeinsamen Kreuzungspunkt (KP) benachbarte Photovoltaikpaneele (PVP) eingreift und diese fest miteinander verbindet,
• **dass** eine durch die feste Verbindung aller Photovoltaikmodule (PVM) mittels der Klemmsysteme (KS) gebildete Modulplatte (MP) als Photovoltaiksystem (PVS) mittels des Seilspannsystems (SSS) an zumindest zwei gegenüber liegenden Stellen fest mit dem Substrat (SU) verbunden ist,
• **dass** die Modulplatte (MP) spaltfrei direkt auf dem Substrat (SU) angeordnet ist und
• **dass** die Leichtbauplatten (LBP) mit einer wasserdurchlässigen Struktur ausgebildet sind.

2. Photovoltaiksystem nach Anspruch 1,
**dadurch gekennzeichnet, dass**
die wasserdurchlässige Struktur der Leichtbauplatten (LBP) von einer auf der dem Substrat (SU) zugewandten Seite der Leichtbauplatten (LBP) vorgesehenen Trapezstruktur (TZS) mit Längs- und Querrillen gebildet ist.

3. Photovoltaiksystem nach Anspruch 1 oder 2,
**dadurch gekennzeichnet, dass**
die Leichtbauplatten (LBP) als für Perimeterdämmung zugelassene Hartschaumplatten ausgeführt sind.

4. Photovoltaiksystem nach Anspruch 1 oder 2,
**dadurch gekennzeichnet, dass**
die Leichtbauplatten (LBP) als Sandwichplatten aus zwei Kunststoffplatten, die durch ein Raumfachwerk miteinander verbunden sind, oder aus einem Drahtgeflecht, das mit luftgefüllten Behältern gefüllt ist, ausgebildet sind.

5. Photovoltaiksystem nach einem der Ansprüche 1 bis 4,
**dadurch gekennzeichnet, dass**
die Photovoltaikpaneele (PVP) außerhalb einer Wasserrückstauebene auf dem Substrat (SU) angeordnet sind.

6. Photovoltaiksystem nach einem der Ansprüche 1 bis 5,
**dadurch gekennzeichnet, dass**
die Photovoltaikpaneele (PVP) als wetterfeste Laminate (LT) ausgebildet sind.

7. Photovoltaiksystem nach Anspruch 6,
**dadurch gekennzeichnet, dass**
die Laminate (LT) mittels zweier Klemmleisten (KL) auf der Oberseite der Laminate (LT) jeweils in die beiden Rahmenprofile (RP) gedrückt werden.

8. Photovoltaiksystem nach Anspruch 6 oder 7,
**dadurch gekennzeichnet, dass**
die Laminate (LT) bifaciale Solarzellen (BSZ) aufweisen und auf der Oberseite der Leichtbauplatten (LBP) ein Reflektor (RF) angeordnet ist.

9. Photovoltaiksystem nach einem der Ansprüche 1 bis 8,
**dadurch gekennzeichnet, dass**
die Klemmsysteme (KS) jeweils aus einem oberen Klemmbock (OKB) und einem unteren Klemmbock (UKB) bestehen, die seitlich gemeinsam ein Trapez bilden, das in Trapezführungen (FN2) in den Rahmenprofilen (RP) eingreift, wobei die beiden Klemmböcke (OKB, UKB) gegeneinander verkeilbar ausgebildet sind.

10. Photovoltaiksystem nach Anspruch 9,
**dadurch gekennzeichnet, dass**
der untere Klemmbock (UKB) eine Durchgangsbohrung (BO) zur Aufnahme eines Seils (SZS) des Seilspannsystems (SSS) aufweist.

## Claims

1. Lightweight photovoltaic system of photovoltaic modules, arranged in rows and columns, which comprise a photovoltaic panel (PVP) and, at a distance therefrom, a self-supporting lightweight building plate (LWP) of a water-repellent material, arranged on a substrate (SU), whereby all lightweight building plates (LWP) within the photovoltaic arrangement are connected uninterruptedly with each other by means of conducting and connecting elements, and a frame as well as a stay cable system
**characterised in that**
• on opposite sides on each photovoltaic panel (PVP) two open frame profiles (FP) are arranged, into which on the underside of each photovoltaic panel (PVP) a clamping system (CS) as a connecting element with a coupling profile as a conducting element engages, whereby each clamping system (CS) simultaneously engages in four adjacent photovoltaic panels (PVP) arranged around a common crossing point (CP) and connects these firmly to each other,
• a module plate (MP) formed by the firm connection of all photovoltaic modules (PVM) by means of the clamping systems (CS), is as a photovoltaic system (PVS) firmly connected with the substrate (SU) at at least two opposite points by means of the stay cable system (SCS),
• the module plate (MP) is directly arranged on the substrate (SU) without a gap and
• the lightweight building plates (LWP) are designed with a water-permeable structure.

2. Photovoltaic system in accordance with claim 1
**characterised in that**
the water-permeable structure of the lightweight building plates (LWP) is formed of a trapezoidal structure (TZS) with longitudinal and lateral grooves provided on the side of the lightweight building plates (LWP) facing the substrate (SU).

3. Photovoltaic system in accordance with claim 1 or 2,
**characterised in that**
the lightweight building plates (LWP) are designed as hard foam plates approved for perimeter insulation.

4. Photovoltaic system in accordance with claim 1 or 2,
**characterised in that**
the lightweight building plates (LWP) are designed as sandwich plate of two plastic plates connected to each other by means of a spatial framework, or as a wire meshing filled with air-filled containers.

5. Photovoltaic system in accordance with any one of claims 1 to 4
**characterised in that**
the photovoltaic panels (PVP) are arranged on the substrate (SU) outside a water backup level.

6. Photovoltaic system in accordance with any one of claims 1 to 5
**characterised in that**
the photovoltaic panels (PVP) are designed as weather-resistant laminates (LT).

7. Photovoltaic system in accordance with claim 6
**characterised in that**
the laminates (LT) are each pressed into the frame profiles (FP) by means of two connecting blocks (CB) on the upper side of the laminates (LT).

8. Photovoltaic system in accordance with claim 6 or 7,
**characterised in that**
the laminates (LT) have bifacial solar cells (BSC), and a reflector (RF) is arranged on the upper side of the lightweight building plates (LWP).

9. Photovoltaic system in accordance with any one of claims 1 to 8,
**characterised in that**
the clamping systems (CS) each comprise an upper clamping device (UCD) and a lower clamping device (LCD) which laterally jointly form a trapezium which engages in trapezoidal guides (FN2) in the frame profiles (FP), whereby the two clamping devices (UCD, LCD) are designed to be able to be wedged against each other.

10. Photovoltaic system in accordance with claim 9,
**characterised in that**
the lower clamping device (LCD) has a through hole (TH) for accommodating a cable (SZS) of the stay cable system (SCS).

## Revendications

1. Système photovoltaïque de poids léger comprenant des modules photovoltaïques disposés en rangées et colonnes, qui sont constitués d'un panneau photovoltaïque (PVP) et d'un panneau léger (LBP) autoporteur, espacé du premier, disposé sur un substrat (SU), à base d'un matériau hydrofuge, tous les panneaux légers (LBP) étant reliés les uns aux autres sans vides à l'intérieur de l'agencement photovoltaïque par des éléments de guidage et de liaison, ainsi qu'un système de cadre et un système de tension de câble,
**caractérisé en ce que**
• deux profilés de cadre (RP) ouverts sont disposés sur chaque panneau photovoltaïque (PVP) sur des côtés opposés, profilés dans lesquels un système de serrage (KS) comme élément de liaison avec un profilé de couplage comme élément de guidage s'engage sur le côté inférieur de chaque panneau photovoltaïque (PVP), chaque système de serrage (KS) s'engageant en même temps dans quatre panneaux photovoltaïques (PVP) voisins autour d'un point de croisement (KP) commun et reliant fixement ces panneaux les uns aux autres,
• **en ce qu'**un panneau modulaire (MP) formé par la liaison fixe de tous les modules photovoltaïques (PVM) au moyen des systèmes de serrage (KS) est relié en tant que système photovoltaïque (PVS) au moyen du système de tension de câble (SSS) sur au moins deux endroits opposés de façon fixe au substrat (SU),
• **en ce que** le panneau modulaire (MP) est disposé sans fente directement sur le substrat (SU) et
• **en ce que** les panneaux légers (LBP) sont conçus avec une structure perméable à l'eau.

2. Système photovoltaïque selon la revendication 1,
**caractérisé en ce que**
la structure perméable à l'eau des panneaux légers (LBP) est formée par une structure trapézoïdale (TZS) prévue sur le côté, tourné vers le substrat (SU), des panneaux légers (LBP) avec des nervures longitudinales et des nervures transversales.

3. Système photovoltaïque selon la revendication 1 ou 2,
**caractérisé en ce que**
les panneaux légers (LBP) sont conçus sous forme de panneaux en mousse rigide autorisés comme isolation de périmètre.

4. Système photovoltaïque selon la revendication 1 ou 2,
**caractérisé en ce que**
les panneaux légers (LBP) sont conçus sous forme de panneaux sandwich constitués de deux panneaux en matière synthétique, qui sont reliés l'un à l'autre par un treillis en espace, ou sont conçus à base d'un treillis métallique, qui est rempli de récipients remplis d'air.

5. Système photovoltaïque selon l'une quelconque des revendications 1 à 4,
**caractérisé en ce que**
les panneaux photovoltaïques (PVP) sont disposés en dehors d'un plan de retenue d'eau sur le substrat (SU).

6. Système photovoltaïque selon l'une quelconque des revendications 1 à 5,
**caractérisé en ce que**
les panneaux photovoltaïques (PVP) sont conçus sous forme de stratifiés (LT) résistants aux intempéries.

7. Système photovoltaïque selon la revendication 6,
**caractérisé en ce que**
les stratifiés (LT) sont appuyés au moyen de deux baguettes de serrage (KL) sur le côté supérieur des stratifiés (LT) respectivement dans les deux profilés de cadre (RP).

8. Système photovoltaïque selon la revendication 6 ou 7,
**caractérisé en ce que**
les stratifiés (LT) présentent des cellules solaires bifaciales (BSZ) et un réflecteur (RF) est disposé sur le côté supérieur des panneaux légers (LBP).

9. Système photovoltaïque selon l'une quelconque des revendications 1 à 8,
**caractérisé en ce que**
les systèmes de blocage (KS) sont constitués chacun d'un support de serrage supérieur (OKB) et d'un support de serrage inférieur (UKB), qui forment latéralement conjointement un trapèze, qui s'engage dans des guides trapézoïdaux (FN2) dans les profilés de cadre (RP), les deux supports de serrage (OKB, UKB) étant conçus de façon à pouvoir être calés les uns par rapport aux autres.

10. Système photovoltaïque selon la revendication 9,
**caractérisé en ce que**
le support de serrage inférieur (UKB) présente un perçage de passage (BO) pour le logement d'un câble (SZS) du système de tension de câble (SSS).
